Europäisches Patentamt

(19) European Patent Office

Office européen des brevets

(11) Publication number: **0 199 487 B1**

# EUROPEAN PATENT SPECIFICATION

(12)

(45) Date of publication of patent specification:
06.03.91 Bulletin 91/10

(51) Int. Cl.⁵: **B65D 8/16, B21D 22/20, B32B 15/18**

(21) Application number: 86302555.7

(22) Date of filing: 07.04.86

(54) Cans and a method for making cans.

(30) Priority: 19.04.85 JP 82283/85
12.06.85 JP 126208/85
13.02.86 JP 27885/86

(43) Date of publication of application:
29.10.86 Bulletin 86/44

(45) Publication of the grant of the patent:
06.03.91 Bulletin 91/10

(84) Designated Contracting States:
DE FR GB IT

(56) References cited:
AU-B- 508 219
GB-A- 2 116 187
US-A- 3 744 664

(73) Proprietor: NIPPON STEEL CORPORATION
6-3 Otemachi 2-chome Chiyoda-ku
Tokyo 100 (JP)

(72) Inventor: Terayama, Kazukiyo c/o Nippon
Steel Corporation
R & D Lab. - III 1-1-1, Edamitsu
Yahatahigashi-ku
Kitakyushu-shi Fukuoka (JP)
Inventor: Oyagi, Yashichi Nippon Steel
Corporation
R & D Lab. - III 1-1-1, Edamitsu
Yahatahigashi-ku
Kitakyushu-shi Fukuoka (JP)
Inventor: Tsukamoto, Yukio c/o Nippon Steel
Corporation
R & D Lab. - III 1-1-1, Edamitsu
Yahatahigashi-ku
Kitakyushu-shi Fukuoka (JP)

(74) Representative: Calderbank, Thomas Roger et
al
MEWBURN ELLIS & CO. 2/3 Cursitor Street
London EC4A 1BQ (GB)

EP 0 199 487 B1

## Description

The present invention relates to cans and to a method of making such cans.

Cans for holding beer or other carbonated drinks are usually made of an aluminium alloy or tinplate by a combined drawing and ironing process. These are usually referred to as drawn and ironed cans. Tinplate is a sheet of steel having an electrocoated layer of tin. As tin is expensive, it is usual for the tin layer to have only a minimum thickness obtained by employing 2.8 to 5.6 g of tin per square metre. A drawn and ironed can requires a strong force for its manufacture, as opposed to a soldered can. The drawn and ironed can has a wall thickness which is as thin as about one-third of the original thickness of tinplate. The severe work of drawing and ironing forms numerous defects in the coated tin layer. An organic protective coating is therefore required on the inner surface of a drawn and ironed tinplate can to ensure it is resistant to corrosion from the drink which it holds. It is usually necessary to repeat the application and baking of any such protective coating twice in order to eliminate completely the coating defects. Usually, however, these steps are carried out only once for an aluminium can, since aluminium has a relatively high degree of corrosion resistance and an aluminium can is therefore, satisfactory in corrosion resistance even if some coating defects remain.

Drawn and ironed cans which are not made of tinplate are also known, which are formed from a steel sheet coated with a suitable organic film. They are disclosed in, for example, Japanese Laid-Open Patent Specification Nos. 94585/1979 and 174242/1982.

A laminated material having a thermoplastic layer between two metal layers is disclosed in GB-A-2116187. However, this material is not suitable for making drawn or drawn and ironed cans.

A laminated material which is composed of two metal sheets and a resin layer disposed therebetwen is also known. For example, Japanese Laid-Open Patent Specification No. 036575/1978 discloses a method which produces a laminated metal sheet by forming a resin layer on a steel sheet and laying an aluminium sheet on the resin layer. This laminated sheet is, however, not intended for use in making cans. The specification states that it is intended for use in the field of electrical appliances and provides an inexpensive decorative material. Insofar as it is intended for decorative use, the aluminium side of the laminated sheet having a better appearance is used to form the outer surface of any product thereof.

The protective coating, repeated twice, on the inner surface of a tinplate, due to the thin plating of tin as described above, necessarily results in increased can production costs. Cans not made of tinplate, but formed from a steel sheet coated with an organic film do not have satisfactory corrosion resistance.

The present invention seeks to overcome, or at least ameliorate the problems of the known materials, particularly in respect of corrosion resistance an work-ability of the materials used to make the can.

According to a first aspect of the present invention, there is provided a drawn or drawn and ironed can comprising a wall formed from a thin sheet of steel and having an inner surface carrying a layer of thermoplastic resin thereon, a foil on said thermoplastic resin layer, and a layer of a thermosetting resin on said foil, said foil being aluminium and/or aluminium alloy ;

wherein :

the thermoplastic resin layer covers the entire inner surface of the steel sheet, the foil covers the entire thermoplastic resin layer and the thermosetting resin layer covers the entire foil.

According to a second aspect of the present invention, there is provided a method of making a drawn or drawn and ironed can which comprises :

preparing a thin sheet of steel carrying a layer of a thermoplastic resin on at least one surface thereof and a foil on the resin layer, said foil being of aluminium and/or an aluminium alloy ;

shaping said sheet into a can having an inner surface defined by the foil ; and

coating the inner surface with a thermosetting resin.

The thermoplatic resin is important for two reasons. In the first place, it serves as an adhesive for making a strong bond between the steel and the foil. In the second place, it effectively prevents the dissolution of iron if the foil has lost its protective action. A still more important advantage of the layer is that it electrically isolates the steel from the aluminium or aluminium alloy an thereby prevents any increased dissolution of iron or aluminium by a local cell action.

The presence of the aluminium or aluminium alloy foil is important for three major reasons. In the first place, it is important from the standpoint of corrosion resistance. In practice, the inner surface of a drawn and ironed can is coated with a thermosetting epoxyphenol or vinyl paint. If any coating defect occurs in any part of the inner surface of the can, the foil in that part prevents any water, oxygen, anions, etc. from reaching the steel surface and thereby inhibits the dissolution of iron therefrom.

In the second place, the presence of the foil is important from the standpoint of workability during the manufacture of a can. It is possible to achieve a considerable improvement in corrosion resistance if the

2

resin layer on the steel surface defining the inner surface of a can has a thickness of at least 50 μm. The presence of a resin layer having such a large thickness, however, presents a serious problem from the standpoint of workability. The steel sheet is reduced to about one-third in thickness when making a drawn and ironed can. It is necessary to use a thermoplastic resin having a high degree of elongation to form the resin layer. An oriented film is unacceptable from the standpoint of workability. Resins having a high degree of elongation, however, are usually very soft and likely to stick to the surface of a punch which is used to form the sheet into the shape of a cup. The cup is therefore difficult to separate from the punch. This means a serious obstacle to high-speed can making. Failure in the separation of cans from the punch makes it necessary to stop the production line, and this may occur frequently. This problem is solved, or at least ameliorated, by the aluminium or aluminium alloy foil.

In the third place, the foil protects the under-lying resin layer. It prevents the resin layer from being broken into pieces by shearing forces during the drawing and ironing process and maintains it in the form of a continuous layer. Moreover, it has an important role in helping the underlying resin layer restore a sound film providing a strong bonding strength and not having any pinholes or similar defects when melted by the heat applied for baking the protective coating on the inner surface of a can. The baking temperature is from 170°C to 180°C if the coating is of a thermosetting vinyl resin, and from 200°C to 220°C if it is of a thermosetting epoxyphenol resin.

The layer of aluminium or an alloy thereof on the thin steel sheet as a base ensures high corrosion resistance and workability of a steel sheet according to this invention and the layer of a thermoplastic resin is effectively utilized to provide a highly corrosive and economical advantage.

The thermoplastic resin layer is necessary to maintain a high bonding strength and remains continuous even after the steel sheet has been worked at a high reduction ratio to about one-third in thickness. It is, therefore, advisable to use a soft thermoplastic resin, such as an acrylic, polyester, polyamide or polyolefin resin, or synthetic resin type rubber.

It is desirable for the layer to have a large thickness from the standpoint of corrosion resistance. A thickness of 3 to 100 μm is, however, sufficient on a drawn and ironed can. A preferred thickness is from 10 to 50 μm. A thickness which is less than three μm should be avoided, as it prevents the layer maintaining continuity when subjected to drawing and ironing.

The foil of aluminium or an alloy thereof has a thickness of 5 to 100 μm, or preferably, 10 to 40 μm. If it is too thin, a large number of pinholes form and make it difficult to maintain a high degree of corrosion resistance. A foil having too large a thickness is unacceptable from an economical standpoint.

When a can is formed from a steel sheet according to the present invention, its aluminium or aluminium alloy face defines the inner surface of the can so that its high corrosion resistance and workability may be effectively utilized. No such composite foil and resin layer is necessarily required for the other face of the sheet defining the outer surface of the can. It is, however, desirable and sufficient for the other surface of the sheet to have a sufficiently high lubricating characteristic to withstand the work of shaping and give the outer surface of a can a high degree of printability and rust resistance. It is, therefore, preferable to coat the other surface of the sheet with a lubricating film. This may be a metallic film formed from tin or zinc or an alloy thereof, an inorganic film of a phosphate or molybdenum disulphide, or an organic film formed from a thermoplastic resin of good workability, such as an epoxy, vinyl or polyester resin.

The metallic film should desirably have a thickness of at least 0.1 μm in order to ensure good workability and rust resistance. Its maximum thickness may be somewhere between two and five μm from an economical standpoint.

In order to form a phosphate film, it is necessary to use a soft phosphate and a highly lubricant oil. It is necessary to employ, say, 0.5 to 5 g of a phosphate per square metre. It is possible to form both a zinc or zinc alloy film and a phosphate film so that the latter may lie on the former.

If an organic film is formed on the outer surface of a can, it is preferable to form it on a steel surface subjected to an appropriate surface treatment, for example, coated with a metallic chromium film and/or a hydrated chromium oxide film, in order to prevent corrosion from occurring under the organic film. The organic film should desirably have a thickness of say, 2 to 20 μm. A thickness of say, 6 to 10 μm is preferred.

A can according to the present invention is made by drawing and ironing such that its aluminium or aluminium alloy face may directly define the inner surface of the can. It enables the high-speed production of cans, as it does not develop any significant coating defects, ant as it has a high degree of workability.

A can according to the present invention which has been formed from a steel sheet eventually may have its inner surface coated with a paint consisting mainly of a thermosetting resin and yields a final product of high corrosion resistance. An air or airless spraying method may be used to apply the paint to the inner surface of the can. It is possible to use a moving or fixed spray gun, while the can is rotated at a high speed. Only a very short time, not exceeding 0.1 second, is required for the application of the paint to each can, which is meanwhile rotated at least three times. It is more difficult to obtain a uniform coating thickness when spraying paint than when using a roll coater. It is, therefore, necessary to select carefully the shape and position of a spray nozzle, the paint, the solvent to be used, the rotating speed of the cans, etc.

The thermosetting vinyl, epoxyamino and epoxyphenol resin paints are examples of the paints which are used more often than any other paint. The paint is applied in the quantity of 3 to 10 $g/m^2$. The baking temperature depends on the paint and ranges from 170°C to 190° for a vinyl resin paint and from 200°C to 220°C for an epoxy resin paint. The paint is baked for several minutes, for example 5 to 10 minutes. If the paint is applied in a quantity exceeding 10 $g/m^2$, it is impossible to obtain a uniformy thick coating, as its low viscosity causes it to drip. The lower limit is the quantity which enables uniform distribution of the paint without leaving any uncoated area. In any event, it is advisable to apply the paint so that it may form a coated layer having a dry thickness of 1 to 15 μm.

The can produced as hereinabove described thus has a wall formed from a thin sheet of steel and having an inner surface carrying a thermoplatic resin layer thereon applied on the sheet, an aluminium or aluminium alloy foil on the thermoplastic resin layer and thermosetting resin layer on the foil applied after making the can. The outer surface of the can may be, for example, coated with a suitable paint or painted in the customary way.

A steel sheet carrying a thermoplastic resin layer having a thickness of 3 to 100 μm on the inner surface of a can according to the present invention and an aluminium or aluminium alloy foil having a thickness of 5 to 100 μm on the thermoplastic resin layer is shaped into a can such that the thermoplastic resin layer may have a thickness of 1 to 30 μm or preferably 4 to 10 μm, while the foil has a thickness of 1 to 30 μm, or preferably 2 to 10 μm.

If the thickness of the thermoplastic resin layer is reduced to less than on μm when the steel sheet is shaped into a can, it lacks corrosion resistance and fails to provide a satisfactory bonding strength. Any thickness exceeding 30 μm is undesirable, as it makes if difficult to strip out a can from a punch, and also from an economic standpoint.

If the thickness of the foil is reduced to less than one μm, it forms a large number of pinholes and fails to provide satisfactory corrosion resistance. A foil thickness exceeding 30 μm is undesirable from an economic standpoint.

The uppermost surface of the can is coated with a thermosetting resin layer having preferably a thikness of 1 to 15 μm, as hereinabove described. Thus, the can according to the present invention has a wall formed from a thin sheet of steel and having an inner surface carrying a thermoplastic resin layer having a thickness of 1 to 30 μm thereon, an aluminium or aluminium alloy foil having a thickness of 1 to 30 μm on the thermoplastic resin layer and a thermosetting resin layer having a thickness of 1 to 15 μm on the foil.

Examples of the invention will now be described in more detail.

## Example 1

An aluminium foil complying with the specification of JIS IN30 and having a thickness of 20 μm was bonded to each surface of a clean sheet of steel having a thickness of 0.27 mm by a thermoplastic polyester resin adhesive having a dry thickness of five μm. Then, the sheet was shaped into a can having a sidewall thickness of 0.100 mm and an outside diameter of 65 mm by two drawing steps and three ironing steps. The inner and outer surfaces of the can were degreased with a sodium phosphate degreasing agent and treated with an agent containing chromic acid and phosphoric acid. Then, a thermosetting expoxyphenol resin paint was sprayed once onto the inner surface of the can and baked at 210°C for 10 minutes to form a coated layer having a dry thickness of five μm.

A plurality of cans were prepared as hereinabove described. Some of the cans were filled with a carbonated drink known as a cola, while the other cans were filled with a transparent carbonated drink known under the tradename "Sprite". After a certain period of time, they were examined for perforation due to corrosion and for the dissolution of iron. The results are shown in TABLE 1 which also shows the results of the examples which will hereinafter be described.

A rust resistance test was conducted on the outer surface of each can. It was alternately wetted and dried each hour at a temperature of 40°C until red rust formed thereon.

TABLE 1 shows the composition of the various layers on each can by the values measured at the middle point of its height.

## Example 2

One surface of a thin sheet of steel having a thickness of 0.28 mm was coated with a film of metallic chromium and hydrated chromium oxide containing 120 mg of chromium per square metre. The other surface of the sheet was plated with 2.7 g of tin per square metre. An aluminium foil complying with the specification of JIS IN30 and having a thickness of 15 μm was bonded to the chromium film by a thermoplastic nylon adhesive layer having a thickness of 20 μm. The procedures of Example 1 were then repeated for the production of a plurality of cans, their surface treatment, their inner surface coating and their tests. The resulsts are shown in TABLE 1.

Example 3

An aluminium foil of 99.9% purity having a thickness of 30 μm was bonded to one of the clean surfaces of a sheet of steel having a thickness of 0.28 mm by a thermoplastic polyurethane resin adhesive layer having a dry thickness of seven μm. The other surface of the sheet was plated with 2.8 g of tin per square metre. This formed the outer surface of a can. The procedures of Example 1 were repeated for the preparation of cans, their inner surface coating and their corrosion resistance tests. The results are shown in TABLE 1.

Example 4

An aluminium foil provided by the specification of JIS IN30 and having a thickness of 15 μm was bonded at 180°C to one surface of thin sheet of steel having a thickness of 0.28 mm by a thermoplastic maleic acidmodified polypropylene resin adhesive layer having a thickness of 25 μm. The other surface of the sheet had a tin layer having a plating weight of 2.8 g/m². This defined the outer surface of a can. The procedures of Example 1 were repeated for the production of cans, their inner surface coating and their corrosion resistance tests. The results are shown in TABLE 1.

Example 5

An aluminium foil conforming to the specification of JIS 1070 and having a thickness of 15 μm was bonded at 200°C to one of the clean surfaces of a sheet of steel having a thickness of 0.28 mm by a thermoplastic modified polypropylene resin adhesive layer having a thickness of 10 μm. The other surface of the sheet was electroplated with 10 g of zinc per square metre. The sheet surface carrying the aluminium foil defined the inner surface of a can. The procedures of Example 1 were repeated for the preparation of cans, their inner surface coating and their corrosion resistance tests. The results are shown in TABLE 1.

Example 6

An aluminium foil conforming to the specification of JIS 1070 and having a thickness of 30 μm was bonded to one surface of a thin sheet of steel having a thickness of 0.26 mm by a thermoplastic polyester resin layer having a thickness of 30 μm, while the other surface of the sheet was plated with 10 g of zinc per square metre. The sheet surface carrying the aluminium foil defined the inner surface of a can. The procedures of Example 1 were repeated for the preparation of cans, their inner surface coating and their corrosion resistance tests. The results are shown in TABLE 1.

Example 7

A thin sheet of steel having a thickness of 0.28 mm was plated on one surface thereof with 5 g of a zinc alloy containing 2% of tin per square metre. An aluminium foil conforming to the specification of JIS 1070 and having a thickness of 30 μm was bonded to the other surface of the sheet by a thermoplastic polyethylene-vinyl acetate resin adhesive layer having a thickness of five μm. The sheet surface carrying the aluminium foil defined the inner surface of a can. The procedures of Example 1 were repeated for the preparation of cans, their inner surface coating and their corrosion resistance tests. The results are shown in TABLE 1.

Example 8

A sheet of steel having a thickness of 0.25 mm was coated on both surfaces thereof with 2.0 g of a zinc phosphate per square metre. An aluminium foil conforming to the specification of JIS IN30 and having a thickness of 20 μm was bonded to one surface of the sheet by a thermoplastic acrylic resin adhesive layer having a thickness of 10 μm. The other surface of the sheet was coated with 0.2 g of a synthetic lubricant oil per square metre and intended for defining the outer surface of a can. The procedures of Example 1 were repeated for the preparation of cans, their inner surface coating and their corrosion resistance tests. The results are shown in TABLE 1.

## Example 9

A clean sheet of steel having a thickness of 0.28 mm was electroplated on one surface thereof with 3 g of zinc per square metre and a film of zinc phosphate having a plating weight of 2.5 g/m$^2$ was formed thereon. An aluminium foil provided for in the specification of JIS 3003 and having a thickness of 20 μm was bonded to the other surface of the sheet by a thermoplastic polyurethane resin adhesive layer having a dry thickness of seven μm. The sheet surface carrying the foil defined the inner surface of a can. The procedures of Example 1 were repeated for the preparation of cans, their inner surface coating and their corrosion resistance tests. The results are shown in TABLE 1.

## Example 10

A sheet of steel having a thickness of 0.28 mm was plated on one surface thereof with 5 g of a zinc-nickel alloy containing 10% of nickel per square metre and a film of zinc phosphate having a plating weight of 2.0 g/m$^2$ was formed thereon. Then, the procedures of Example 9 were repeated. The results are shown in TABLE 1.

## Example 11

A sheet of steel having a thickness of 0.25 mm was coated on each surface thereof with a film of metallic chromium and hydrated chromium oxide containing 120 mg of chromium per square metre. A thermoplastic modified vinyl resin paint was applied in a layer having a thickness of five μm to one surface of the sheet and baked at 180°C for 10 minutes. An aluminium foil conforming to the specification of JIS IN30 and having a thickness of 50 microns was bonded to the other surface of the sheet by a hot melt type polyester resin adhesive which had been applied in a layer having a thickness of 15 μm. The sheet surface carrying the foil defined the inner surface of a can. Then, the procedures of Example 1 were repeated for the preparation of cans, their inner surface coating, filling contents in the can and their corrosion resistance tests. The results are shown in TABLE 1.

## Example 12

A film of metallic chromium and hydrated chromium oxide containing 100 mg of chromium per square metre was formed on each surface of a thin sheet of steel having a thickness of 0.26 mm. An epoxyphenol resin paint was applied in a layer having a thickness of seven μm to one surface of the sheet and baked at 195°C for 10 minutes. An aluminium foil conforming to the specification of JIS IN30 and having a thickness of 10 μm was bonded to the other surface of the sheet by a thermoplastic modified polypropylene resin adhesive which had been applied in a layer having a thickness of 30 μm. The sheet surface carrying the foil defined the inner surface of a can. The procedures of Example 1 were repeated for the preparation of cans, their inner surface coating and their corrosion resistance tests. The results are shown in TABLE 1.

## Example 13

A thin sheet of steel having a thickness of 0.15 mm, a hardness of $H_R30T$ 60~61, and a tensile strength of 38.3 kg/mm$^2$ was coated on both surfaces thereof with a film of 100~110 mg/m$^2$ of metallic chromium and hydrated chromium oxide containing 15~18 mg/m$^2$ of chromium. An aluminium foil having a thickness of 7 μm was bonded to the surface of chromium film defining the inner surface of a can by a modified polypropylene adhesive layer having a thickness of 15 μm. A thermosetting epoxyphenol resin layer having a thickness of 5 μm was coated on the aluminium foil.

A thermosetting vinyl paint was coated on the other surface of a can. Then the sheet was shaped into a can having a diameter of 77 mm and a height of 59.3 mm where an aluminium foil constitute the inner surface of a can by two steps of drawing.

Some of the cans were filled with soaked mackerel with tomato sauce and the increases in volume of the cans were measured as time passed (volume increases are expressed is increases in on linear dimension).

The cans of the present invention show better results than the cans having a thermosetting epoxyphenol resin paint of 5 μm thickness coated on the inner surface of the known tin plated cans. Test results are shown in TABLE 2.

## Example 14

Both surfaces of a thin sheet of steel having a thickness of 0.05 mm, a hardness of $H_{RT}58$, and a tensile strength of 34 kg/mm$^2$ were coated with a film of 40~50 mg/m$^2$ of metallic chromium and hydrated chromium oxide containing 15~18 mg/$^2$ of chromium. An aluminium foil having a thickness of 7 μm was bonded to one surface of the chromium film by a modified polypropylene adhesive. A thermosetting vinyl paint of a thickness of 5 μm was coated on each surface of the can and baked at 160°C for 10 minutes. Then the sheet was shaped into a can having an average diameter of 62 mm (bottom diameter of 60 mm, upper diameter of 64 mm) where an aluminium foil formed the internal surface of a can by drawing.

Some of the cans were filled with soft bean jelly, and left in that condition at 38°C for one year. They were opened after one year, and the dissolution of iron, taste and the condition of the inner surface of cans were tested. No problems were recognized.

## Comparative Example 1

A sheet of steel having a thickness of 0.25 mm was plated on each surface thereof with 2.8 g of tin per square metre. Then, the procedures of Example 1 were repeated for the preparation of cans, filling contents in the can, and their corrosion resistance tests. The results are shown in TABLE 1 (3).

## Comparative Example 2

The procedures of Example 1 were repeated for preparing cans from a thin sheet of steel having a thickness of 0.28 mm and plated on each surface thereof with 2.8 g of tin per square metre. A paint was sprayed in a quantity of 80 to 100 mg/m$_2$ onto the inner surface of each can. This inner surface coating was repeated twice in accordance with common practice. Then, the cans were tested in accordance with the procedures of Example 1.

## Comparative Example 3

A thin sheet of steel having a thickness of 0.27 mm was plated on one surface thereof with 2.8 g of tin per square metre. An unoriented polypropylene film having a thickness of 50 μm was bonded to the other surface of the sheet by a polyurethane resin adhesive which had been applied in a layer having a thickness of five μm. The sheet surface carrying the polypropylene film defined the inner surface of a can. The procedures of Example 1 were repeated for making drawn and ironed cans. The drawn and ironed cups could not be separated from the punch. The cans were caught by the release pawls on the punch and broken at the upper ends thereof. No can that could be tested was produced.

As is obvious from TABLE 1, all of the cans prepared in accordance with this invention showed a lower degree of iron dissolution than any of the cans described in the comparative examples and exhibited excellent corrosion resistance without having any hole formed by corrosion even after six months of corrosion testing.

The steel sheet having an aluminium or aluminium alloy layer on one surface thereof which, in use, defines the inner surface of the can of this invention enables the economical production of a can having excellent corrosion resistance, as it has a high degree of workability and does not require any repeated coating on the inner surface of the can.

EP 0 199 487 B1

TABLE 1 (1)

| | | Composition of Layers | |
|---|---|---|---|
| | | Layers before making cans | |
| | | Inner Surface | Outer Surface |
| Examples | 1 | Polyester Resin (5 μm)+Aℓ (20 μm) | Epoxy Resin (5 μm)+Aℓ (20 μm) |
| | 2 | Cr Layers (120mg/m² ) + Nylon Resin (20 μm)+Aℓ (15 μm) | Sn (2.7g/m² ) |
| | 3 | Polyurethane Resin (7 μm)+Aℓ (30 μm) | Sn (2.8g/m² ) |
| | 4 | Maleic acid modified Polypropylene Resin (25 μm)+Aℓ (15 μm) | Sn (2.8g/m² ) |
| | 5 | Modified Polypropylene (10 μm)+Aℓ (15 μm) | Zn(10g/m² ) |
| | 6 | Polyester Resin (30 μm)+Aℓ (30 μm) | Zn(10g/m² ) |
| | 7 | Polyethylene-Vinyl Acetate resin (5 μm) + Aℓ (30 μm) | Zn−Sn (2 %) Alloy ( 5g/m² ) |
| | 8 | Zinc Phosphate (2.0g/m² ) +Acrylic Resin (10 μm)+Aℓ (20 μm) | Zinc Phosphate (2.0g/m² ) +Synthetic Lubricant Oil (0.2g/m² ) |
| | 9 | Polyurethane Resin (7 μm)+Aℓ (20 μm) | Zn (3g/m² ) +Zinc Phosphate (2.5g/m² ) |
| | 10 | Polyurethane Resin (7 μm)+Aℓ (20 μm) | Zn−Ni (10%) Alloy (5g/m² ) +Zinc Phosphate (2.0g/m² ) |
| | 11 | Cr Layers (120mg/m² ) +Polyester Resin (15 μm)+Aℓ (50 μm) | Cr Layers (120mg/m² ) + Modified Vinyl Resin(5 μm) |
| | 12 | Cr Layers (100mg/m² ) + Modified Polypropylene (30 μm)+Aℓ (10 μm) | Cr Layers (100mg/m² ) + Epoxyphenol Resin (7 μm) |

EP 0 199 487 B1

TABLE 1 (2)

| | | Composition of Layers | | Rust Resistance | Corrosion Resistance(30 °C, 6months) | | | |
|---|---|---|---|---|---|---|---|---|
| | | Layers On Can Surface | | (Hrs. until 1% Red | Perforation(cans) | | Dissolution of Iron (ppm) | |
| | | Inner Surface | | Rust Formed:40°C) | Cola | Sprite | Cola | Sprite |
| Examples | 1 | Polyester Resin (1.6μm)+Aℓ(6.6μm) +Epoxyphenol Resin (5μm) | | 1000 | 0 | 0 | 0.04 ~ 0.06 | 0.05 ~ 0.08· |
| | 2 | Nylon Resin (6.7μm)+Aℓ(5.0μm) +Epoxyphenol Resin (5μm) | | 2 | 0 | 0 | 0.01 ~ 0.04 | 0.02 ~ 0.06 |
| | 3 | Polyurethane Resin (2.3 μm)+Aℓ(9.0μm) +Epoxyphenol Resin (5μm) | | 4 | 0 | 0 | 0.03 ~ 0.06 | 0.03 ~ 0.07 |
| | 4 | Maleic acid Modified Polypropylene(0.2μm) + Aℓ(4.9μm)+Epoxyphenol Resin (5μm) | | 2 | 0 | 0 | 0.01 ~ 0.04 | 0.01 ~ 0.05 |
| | 5 | Modified Polypropylene Resin(3.4μm)+ Aℓ(5.2μm)+Epoxyphenol Resin (5μm) | | 350 | 0 | 0 | 0.03 ~ 0.05 | ·0.02 ~ 0.06 |
| | 6 | Polyester Resin (9.6μm)+Aℓ(9.6μm) +Epoxyphenol Resin (5μm) | | 350 | 0 | 0 | 0.01 ~ 0.03 | 0.01 ~ 0.03 |
| | 7 | Polyethylene-Vinyl Acetate Resin(1.7μm) + Aℓ(10 μm)+Epoxyphenol Resin (5μm) | | 70 | 0 | 0 | 0.03 ~ 0.07 | 0.03 ~ 0.06 |
| | 8 | Acrylic Resin (3.6μm)+Aℓ(7.5μm) +Epoxyphenol Resin (5μm) | | 1 | 0 | 0 | 0.03 ~ 0.06 | 0.04 ~ 0.06 |
| | 9 | Polyurethane Resin (2.4μm)+Aℓ(6.6μm) +Epoxyphenol Resin (5μm) | | 80 | 0 | 0 | 0.03 ~ 0.06 | 0.04 ~ 0.06 |
| | 10 | Polyurethane Resin (2.4μm)+Aℓ(6.6μm) +Epoxyphenol Resin (5μm) | | 400 | 0 | 0 | 0.03 ~ 0.07 | 0.04 ~ 0.07 |
| | 11 | Polyester Resin (4.9μm)+Aℓ(16.4 μm) +Epoxyphenol Resin (5μm) | | 100 | 0 | 0 | 0.02 ~ 0.04 | 0.03 ~ 0.06 |
| | 12 | Modified Polypropylene(10.3 μm)+Aℓ(3.4 μm)+Epoxyphenol Resin (5μm) | | 100 | 0 | 0 | 0.01 ~ 0.04 | 0.01 ~ 0.03 |

EP 0 199 487 B1

## TABLE 1 (3)

| | | Composition of Layers | |
|---|---|---|---|
| | | Layers before making cans | |
| | | Inner Surface | Outer Surface |
| Comparative Examples | 1 | Sn (2.8g/m² ) | Sn (2.8g/m² ) |
| | 2 | Sn (2.8g/m² ) | Sn (2.8g/m² ) |
| | 3 | Polyurethane Resin(5 μm) +Unoriented Polypropylene Resin (50 μm) | Sn (2.8g/m² ) |

## TABLE 1 (4)

| | | Composition of Layers | Rust Resistance | Corrosion Resistance(38 °C, 6 months) | | | |
|---|---|---|---|---|---|---|---|
| | | Layers on Can Surface | (Hrs. until 1% Red | Perforation(cans) | | Dissolution of Iron (ppm) | |
| | | Inner Surface | Rust Formed:40°C) | Cola | Sprite | Cola | Sprite |
| Comparative Examples | 1 | Sn(0.9g/m³) +Epoxyphenol Resin (5 μm) | 4 | 12/50 | 14/50 | 0.04 ~ 0.12 | 0.05 ~ 0.18 |
| | 2 | Sn(0.9g/m³) +Epoxyphenol Resin (10 μm) | 2 | 1/50 | 1/50 | 0.06 ~ 0.09 | 0.07 ~ 0.10 |
| | 3 | ——— | — | — | — | — | — |

EP 0 199 487 B1

## TABLE 2

| Samples | Test Temp. | Test Period | | | |
|---|---|---|---|---|---|
| | | 3 months | 6 months | 12months | 24months |
| Cans of the Invention | Normal Temp. | <0.01mm | <0.01mm | <0.01mm | <0.01mm |
| | 38°C | <0.01mm | 0.01mm | 0.05mm | 0.12mm |
| Known Cans | Normal Temp. | <0.01mm | <0.01mm | <0.01mm | 0.02mm |
| | 38°C | <0.01mm | 0.02mm | 0.06mm | 0.15mm |

## Claims

1. A drawn and ironed can comprising a wall formed from a thin sheet of steel and having an inner surface carrying a layer of a thermoplastic resin thereon, a foil on said thermoplastic resin layer, and a layer of a thermosetting resin on said foil, said foil being aluminium and/or aluminium alloy ;
wherein
the thermoplastic resin layer covers the entire inner surface of the steel sheet, the foil covers the entire thermoplastic resin layer and the thermosetting resin layer covers the entire foil.

2. A drawn can comprising a wall formed from a thin sheet of steel and having an inner surface carrying a layer of a thermoplastic resin thereon, a foil on said thermoplastic resin layer, and a layer of a thermosetting resin on said foil, said foil being aluminium and/or aluminium alloy ;
wherein
the thermoplastic resin layer covers the entire inner surface of the steel sheet, the foil covers the entire thermoplastic resin layer and the thermosetting resin layer covers the entire foil.

3. A can according to claim 1 or claim 2, wherein said thermoplastic resin layer has a thickness of 1 to 30 µm, said foil has a thickness of 1 to 30 µm and said thermosetting resin layer has a thickness of 1 to 15 µm.

4. A method of making a drawn can or a drawn and ironed can which comprises :
preparing a thin sheet of steel carrying a layer of a thermoplastic resin on at least one surface thereof and a foil on the resin layer, said foil being of aluminium and/or an aluminium alloy ;
shaping said sheet into a can having an inner surface defined by the foil ; and
coating the inner surface with a thermosetting resin.

## Ansprüche

1. Abstrecktiefgezogene Dose mit einer aus einem dünnen Stahlblech geformten Wand, deren innere Oberfläche eine Schicht aus einem thermoplastischen Harz eine Folie auf der thermoplastischen Harzschicht und eine Schicht aus einem wärmeaushärtenden Harz auf der Folie trägt, wobei die Folie Aluminium und/oder eine Aluminiumlegierung ist ;
bei der die thermoplastische Harzschicht die gesamte innere Oberfläche des Stahlblechs bedeckt, die Folie die gesamte thermoplastische Harzschicht bedeckt und die wärmeaushärtende Harzschicht die gesamte Folie bedeckt.

2. Tiefgezogene Dose mit einer aus einem dünnen Stahlblech geformten Wand, deren innere Oberfläche eine Schicht aus einem thermoplastischen Harz, eine Folie auf der thermoplastischen Harzschicht und eine Schicht aus einem wrmeaushärtenden Harz auf der Folie trägt, wobei die Folie Aluminium und/oder eine Aluminiumlegierung ist ;
bei der die thermoplastische Harzschicht die gesamte innere Oberfläche des Stahlblechs bedeckt, die Folie die gesamte thermoplastische Harzschicht bedeckt und die wärmeaushärtende Harzschicht die gesamte Folie bedeckt.

3. Dose nach Anspruch 1 oder Anspruch 2, bei der die thermoplastische Harzschicht eine Dicke von 1 bis 30 µm hat, die Folie eine Dicke von 1 bis 30 µm hat und die wärmeaushärtende Harzschicht eine Dicke von 1 bis 15 µm hat.

4. Verfahren zum Herstellen einer tiefgezogenen Dose oder einer abstrecktiefgezogenen Dose, das enthält :
Herstellen eines dünnen Stahlblechs, das eine Schicht aus einem thermoplastischen Harz auf mindestens einer seiner Oberflächen und eine Folie auf der Harzschicht trägt, wobei die Folie Aluminium und-/oder eine Aluminiumlegierung ist ;
Formen des Blechs in eine Dose mit einer durch die Folie definierten inneren Oberfläche ; und
Beschichten der inneren Oberfläche mit einem wärmeaushärtenden Harz.

## Revendications

1. Boîte étirée enduite de fer comprenant une paroi formée d'une tôle mince d'acier et ayant une surface interne portant une couche de résine thermoplastique, une feuille sur ladite couche de résine thermoplastique et une couche de résine thermodurcissable sur ladite feuille, ladite feuille étant en aluminium et/ou en alliage d'aluminium ;

où

la couche de résine thermoplastique couvre toute la surface interne de la tôle d'acier, la feuille couvre toute la couche de résine thermoplastique et la couche de résine thermodurcissable couvre toute la feuille.

2. Boîte étirée comprenant une paroi formée d'une tôle mince d'acier et ayant une surface interne portant une couche d'une résine thermoplastique, une feuille sur ladite couche de résine thermoplastique et une couche de résine thermodurcissable sur ladite feuille, ladite feuille étant en aluminium et/ou alliage d'aluminium ;

où

la couche de résine thermoplastique couvre toute la surface interne de la tôle d'acier, la feuille couvre toute la couche de résine thermoplastique et la couche de résine thermodurcissable couvre toute la · feuille.

3. Boîte selon ta revendication 1 ou la revendication 2, où ladite couche de résine thermoplastique a une épaisseur de 1 à 30 µm, ladite feuille a une épaisseur de 1 à 30 µm et ladite couche de résine thermodurcissable a une épaisseur de 1 à 15 µm.

4. Procédé de fabrication d'une boîte étirée ou étirée et enduite de fer qui comprend :

la préparation d'une tôle mince d'acier portant une couche d'une résine thermoplastique sur au moins une surface et une feuille sur la couche de résine, ladite feuille étant en aluminium et/ou en alliage d'aluminium ;

la mise en forme de ladite tôle en une boîte ayant une surface interne définie par la feuille ; et

l'enduction de la surface interne par une résine thermodurcissable.